# EUROPÄISCHE PATENTANMELDUNG

(11) **EP 3 670 384 A1**
(43) Veröffentlichungstag der Anmeldung: **24.06.2020**
(21) Anmeldenummer: 19212618.3
(22) Anmeldetag: 29.11.2019
(51) Int. Cl.: B65D 88/12, B65D 19/42, B65D 19/44, B62B 3/02, E04G 5/00

(54) **VERFAHREN UND VORRICHTUNG FÜR DIE ERRICHTUNG VON BAUWERKEN**

(30) Priorität: 18.12.2018 DE 102018222099
(71) Anmelder: Hünnebeck GmbH, 40885 Ratingen (DE)
(72) Erfinder: Hagemes, Klaus, 41749 Viersen (DE); Schnelting, Ingo, 46459 Rees-Mehr (DE); Toepel, Philipp, 44627 Herne (DE)
(74) Vertreter: Gille Hrabal

(57) **Zusammenfassung**

Die Erfindung betrifft ein Verfahren für die Errichtung von Bauwerken mit den Schritten:
• für die Errichtung von Bauwerken benötigte Bauteile werden in kranbaren und stapelbaren Transportbehältern (15) zu einer der Errichtung eines Bauwerks dienenden Baustelle geliefert,
• ein gelieferter Transportbehälter (15) wird durch Befestigungsmittel (4) an einem mit Rollen (1, 2) versehenen Rahmen (3) lösbar befestigt,
• der Transportbehälter (15) mit dem daran befestigten Rahmen (3) wird durch eine Transporteinrichtung auf einem Untergrund eines bereits zum Teil errichteten Bauwerks abgestellt,
• der auf dem Untergrund abgestellte Transportbehälter (15) wird auf dem Untergrund mithilfe der Rollen (1, 2) zu einem Einsatzort verfahren,
• am Einsatzort werden ein oder mehrere Bauteile (22) aus dem Transportbehälter (15) für die Errichtung des Bauwerks entnommen.

Die Erfindung betrifft ein System zur Durchführung des Verfahrens nach umfassend einen aus Stahl bestehenden stapelbaren und kranbaren Transportbehälter (15) und einen mit Rollen (1, 2) versehenen, aus Stahl bestehenden Rahmen (3), wobei der Rahmen (3) durch Befestigungsmittel und zwar durch aus Stahl bestehende Schnellverschlüsse (4) an der Unterseite des Transportbehälters (15) lösbar befestigt werden kann, wobei die Traglast des Transportbehälters wenigstens 1000 kg beträgt.

## Beschreibung

Die Erfindung betrifft ein Verfahren und eine Vorrichtung für die Errichtung von Bauwerken. Die Erfindung bezieht sich insbesondere auf die Errichtung von Bauwerken, die mehrheitlich oberhalb der Geländelinie liegen, also auf den Hochbau.

Dafür benötigte Bauteile können in kranbaren und stapelbaren Transportbehältern geliefert werden. Ein Transportbehälter im Sinne der vorliegenden Erfindung umfasst Gitterboxen oder Gestelle, die benötigte Bauteile aufnehmen können, um die Bauteile lagern und transportieren zu können. Die mit benötigten Bauteilen gefüllten Transportbehälter werden beispielsweise durch Lastkraftwagen angeliefert. Die mit benötigten Bauteilen gefüllten Transportbehälter können nach einem Entladen auf einer Baustelle in gestapelter Form gelagert werden. Bei Bedarf kann ein mit benötigten Bauteilen gefüllter Transportbehälter beispielsweise mithilfe eines Krans zu einem gewünschten Einsatzort bewegt werden. Monteure können dann die benötigten Bauteile aus dem Transportbehälter entnehmen.

Beispiele für benötigte Bauteile sind Arretiervorrichtungen für Anker, Stahlrohrstützen oder Holzträger. So können also kranbare und stapelbare Gitterboxen mit Arretiervorrichtungen für Anker gefüllt sein, die für Wandschalungen oder Deckenschalungen benötigt werden. Kranbare und stapelbare Stapelgestelle können eine Vielzahl von Stahlrohrstützen aufnehmen und lagern.

Ist ein Rohbau eines Bauwerks, also zum Beispiel eines aus mehreren Etagen bestehenden Gebäudes fertiggestellt, so erfolgt der Innenausbau des Bauwerks bzw. des Gebäudes. Bei Bedarf wird ein mit benötigten Materialien gefüllter und auf der Baustelle gelagerter Transportbehälter mithilfe eines Krans auf einer Etage eines Rohbaus abgestellt. Monteure können nun die benötigten Materialien aus dem abgestellten Transportbehälter entnehmen und montieren.

Eine Gitterbox oder Gitterboxpalette ist ein aus einer Stahlrahmen-Gitter-Konstruktion bestehendes Ladehilfsmittel in der Fördertechnik. Es können vier Füße vorhanden sein, die die Aufnahme der Gitterbox mittels eines Gabelstaplers ermöglichen. Es können Stellwinkelaufsätze vorhanden sein, die für eine Stapelung der Gitterbox vorgesehen sind. Ein oder mehrere Seitenteile können beispielsweise zur Hälfte aufklappbar für einfaches Be- und Entladen sein.

Es gibt von der European Pallet Association e. V. genormte Gitterboxen, die Eurogitterboxen genannt werden. Die Außenmaße von Eurogitterboxen betragen in der Breite 835 mm, in der Länge 1240 mm und in der Höhe 970 mm. Die Innenmaße von Eurogitterboxen betragen in der Breite 800 mm, in der Länge 1200 mm und in der Höhe 800 mm. Das Leergewicht von Eurogitterboxen beträgt ca. 70 kg und das Nutzvolumen umfasst rund 0,75 m³. Die Traglast beträgt 1.000-1.500 kg. Die Auflast beträgt 4.400-6.000 kg. Die Anzahl der stapelbaren Einheiten liegt bei drei bis fünf Stück.

Stapelgestelle können vier senkrechte Streben umfassen, die durch einen rechteckigen oder quadratischen Rahmen miteinander verbunden sind. Stapelgestelle bestehen grundsätzlich aus Stahl. Stapelgestelle können Füße umfassen, um diese mithilfe von Gabelstaplern transportieren und/ oder um Stapelgestelle stapeln zu können.

Transportbehälter, also zum Beispiel Gitterboxen oder Stapelgestelle, können Rollen umfassen, um Transportbehälter verfahren zu können.

Die Druckschrift DE 10 2011 118 363 A1 offenbart einen Trägerrahmen mit Laufrollen und Zentrierungselementen, auf dem ein stapelbarer Transportbehälter wie zum Beispiel eine stapelbare Gitterbox abgesetzt werden kann. Der stapelbare Transportbehälter kann durch Schraubbolzen an dem Trägerrahmen befestigt werden. Ist der Trägerrahmen an dem stapelbaren Transportbehälter befestigt, so kann dieser dennoch gestapelt werden.

Die Druckschrift DE 10 2006 023 741 B3 offenbart, Laufrollen an einer stapelbaren Gitterbox anzubringen, um die Gitterbox verfahren und dennoch stapeln zu können.

Eine mit Laufrädern versehene Gitterbox ist aus der Druckschrift DE 202014005044 U1 bekannt.

Es ist Aufgabe der Erfindung, Bauwerke effizienter errichten zu können.

Die Aufgabe der Erfindung wird durch ein Verfahren mit den Merkmalen des ersten Anspruchs gelöst. Eine Vorrichtung zur Durchführung des Verfahrens umfasst die Merkmale des Nebenanspruchs. Vorteilhafte Ausgestaltungen ergeben sich aus den abhängigen Ansprüchen.

Anspruch 1 betrifft ein Verfahren für die Errichtung von Bauwerken. Insbesondere dient das Verfahren der Errichtung eines Gebäudes, welches mehrere Geschosse umfasst.

Für die Errichtung eines Bauwerks benötigte Bauteile werden in kranbaren und stapelbaren Transportbehältern zu einer der Errichtung eines Bauwerks dienenden Baustelle geliefert. Dies geschieht beispielsweise durch einen Lastkraftwagen. Insbesondere sind mehrere Transportbehälter übereinander gestapelt, wenn diese mit dem Lastkraftwagen angeliefert werden. Da die Transportbehälter während der Anlieferung nicht mit Rollen versehen sind, können diese besonders platzsparend übereinander gestapelt werden. Hat der Lastkraftwagen die Baustelle erreicht, so werden die Transportbehälter beispielsweise mithilfe eines Krans auf der Baustelle abgestellt und zwar vorzugsweise übereinander gestapelt. Es können dadurch beispielsweise drei bis fünf Transportbehälter übereinander gestapelt auf der Baustelle abgestellt sein. Durch den Lastkraftwagen können ein oder mehrere Rahmen angeliefert werden, die mit Rollen versehen sind. Ein oder mehrere Rahmen, die mit Rollen versehen sind, können sich aber auch bereits vor der Anlieferung der Transportbehälter auf der Baustelle befinden. Ein oder mehrere Rahmen können übereinander gestapelt abgestellt sein, um einen Rahmen bei Bedarf von dem Stapel zu entnehmen.

Im Anschluss daran wird ein gelieferter Transportbehälter durch Befestigungsmittel an einem mit Rollen versehenen Rahmen lösbar befestigt. Es findet also im Vergleich zur üblichen Vorgehensweise eine zusätzlicher Montageschritt statt, für den die Arbeitszeit und Arbeitskraft eines Monteurs bereitgestellt werden muss. Es wird insofern von einem fachüblichen Handeln abgewichen, da ein Fachmann zusätzliche Montageschritte grundsätzlich vermeiden will.

In einem nächsten Schritt wird der Transportbehälter mit dem daran befestigten Rahmen durch eine Transporteinrichtung auf einem Untergrund eines bereits zum Teil errichteten Bauwerks abgestellt. Ist beispielsweise ein Rohbau eines Gebäudes bereits fertig gestellt, so wird der Transportbehälter mit dem daran befestigten Rahmen auf dem Boden einer Etage eines Rohbaus abgestellt.

Der auf dem Untergrund abgestellte Transportbehälter wird in einem nächsten Schritt auf dem Untergrund mithilfe der Rollen zu einem Einsatzort verfahren. Im Fall des Rohbaus wird der Transportbehälter also auf dem Boden zu dem Ort innerhalb der Etage verfahren bzw. gerollt, bei dem die im Transportbehälter vorhandenen Bauteile benötigt werden. Am Einsatzort werden ein oder mehrere Bauteile aus dem Transportbehälter für die Errichtung des Bauwerks entnommen. Die Bauteile werden also bestimmungsgemäß montiert. Danach wird der Transportbehälter zu einem nächsten Einsatzort gerollt.

Im Fall einer Gebäudeherstellung kann ein danach noch teilweise gefüllter Transportbehälter beispielsweise durch einen Kran auf eine andere Etage gebracht werden, um hier weitere benötigte Bauteile aus dem Transportbehälter in der zuvor beschriebenen Weise zu montieren.

Ist ein Transportbehälter vollständig entleert worden und wird dieser dann auch nicht auf eine andere Weise benötigt, so wird der Rahmen wieder vom Transportbehälter gelöst. Im Anschluss daran kann der Transportbehälter von der Baustelle abtransportiert werden. Der gelöste Rahmen steht nun wieder zur Verfügung, um mit einem nächsten Transportbehälter, der mit Bauteilen gefüllt ist, verbunden zu werden.

Obwohl bei diesem Verfahren zusätzliche Arbeitsschritte erforderlich sind, kann insgesamt Arbeitszeit bzw. Montagezeit eingespart werden, sodass sich Vorteile gegenüber dem üblichen Stand der Technik ergeben.

Zwar sind aus dem eingangs genannten Stand der Technik Lösungen bekannt, wie ein Transportbehälter beschaffen sein muss, damit dieser sowohl gestapelt als auch verfahren werden kann. Selbst gegenüber diesem Stand der Technik ist das erfindungsgemäße Verfahren vorzuziehen. Dies hängt zum einen damit zusammen, dass die Bauhöhe bei Transportbehälter größer ist, die sowohl gestapelt als auch verfahren werden können. Zum anderen hängt es damit zusammen, dass die Bodenfreiheit bei solchen Transportbehältern gering ist, wenn versucht wird, die erforderliche Bauhöhe zu minimieren. Rollbare Transportbehälter mit geringer Bodenfreiheit haben sich auf Baustellen als ungeeignet herausgestellt. Die erfindungsgemäße Lösung ist gegenüber Transportbehältern, die sowohl rollbar als auch stapelbar sind, auch deshalb vorteilhaft, weil nicht für jeden Transportbehälter ein mit Rollen versehener Rahmen auf einer Baustelle bereitgestellt werden muss. Auf einer Baustelle befinden sich daher grundsätzlich mehr Transportbehälter als mit Rollen versehene Rahmen. Es kann dadurch Material eingespart werden. Außerdem kann Lagerplatz auf einer Baustelle dadurch eingespart werden.

Um das Befestigen eines Rahmens an dem Transportbehälter schnell durchführen zu können, gibt es in einer Ausgestaltung der Erfindung ein oder mehrere Schnellverschlüsse. Durch die ein oder mehreren Schnellverschlüsse kann der Rahmen besonders zeitsparend mit dem Transportbehälter verbunden werden. Zu einem späteren Zeitpunkt kann der Rahmen dann auch wieder besonders zeitsparend von dem Transportbehälter gelöst werden. Insgesamt wird daher die Aufgabe der Erfindung verbessert gelöst.

Vorteilhaft sind die ein oder mehreren Schnellverschlüsse an dem mit Rollen versehenen Rahmen angebracht, um die Zahl der benötigten Schnellverschlüsse gering halten zu können. Dies hängt damit zusammen, dass die Zahl der benötigten mit Rollen versehenen Rahmen geringer ist als die Zahl der benötigten Transportbehälter.

Schraubverbindungen, bei denen eine Schraube eine große Vielzahl von Umdrehungen für ein befestigen durchführen muss, sind keine Schnellverschlüsse im Sinne der vorliegenden Erfindung. Ein Schnellverschluss ist ein mechanisches Befestigungsmittel, mit dem ein mit Rollen versehener Rahmen schneller an einem Transportbehälter befestigt werden kann im Vergleich zu der Zeit, die für ein Befestigen mittels der genannten Schraubverbindung aufgewendet werden muss. Ein Schnellverschluss ist so beschaffen, dass ein Verschlussmittel wie zum Beispiel ein Bolzen im Vergleich zu der genannten Schraubverbindung nur gering bewegt werden muss, um einen mit Rollen versehenen Rahmen an einem Transportbehälter bestimmungsgemäß zu befestigten. Vorzugsweise muss das Verschlussmittel um nicht mehr als 360°, besonders bevorzugt um nicht mehr als 180° gedreht werden, um einen mit Rollen versehenen Rahmen an einem Transportbehälter zu befestigten. So umfasst eine Bajonettverbindung ein Verschlussmittel, das nicht mehr als 360° für ein Befestigen gedreht werden muss. Eine Bajonettverbindung ist daher ein Beispiel für einen Schnellverschluss. Vorzugsweise muss das Verschlussmittel alternativ oder ergänzend zu einer Drehbewegung von nicht mehr als 360° verschoben werden, um einen mit Rollen versehenen Rahmen an einem Transportbehälter zu befestigten.

Schnellverschlüsse sind insbesondere bei sämtlichen Ecken eines Rahmens vorgesehen, um besonders zuverlässig einen mit Rollen versehenen Rahmen an einem Transportbehälter zu befestigen. Vorteilhaft sind daher vier Schnellverschlüsse vorhanden. Es können aber auch weniger als vier Schnellverschlüsse genügen wie zum Beispiel zwei Schnellverschlüsse, die sich beispielsweise bei diagonal gegenüberliegenden Ecken eines Rahmens befinden. Es kann nur ein Schnellverschluss genügen.

In einer Ausgestaltung umfasst ein Schnellverschluss einen verschiebbar gelagerten Bolzen, der für das Befestigen von einer Ausgangsstellung kommend in Richtung einer Befestigungsstellung verschoben wird und zwar insbesondere entlang seiner Längsachse. Diese Ausgestaltung umfasst, dass vor und/oder nach der Schiebbewegung der Bolzen gedreht werden kann, um von der Ausgangsstellung in die Befestigungsstellung zu gelangen und umgekehrt.

Befindet sich der Bolzen in seiner Befestigungsstellung, so ist dann der Transportbehälter an dem mit Rollen versehenen Rahmen befestigt. Um den Transportbehälter wieder von dem mit Rollen versehenen Rahmen lösen zu können, muss der Bolzen erst aus seiner Befestigungsstellung heraus bewegt werden. Befindet sich der Bolzen in seiner Ausgangsstellung, so ist der mit Rollen versehene Rahmen nicht an dem Transportbehälter befestigt.

In einer Ausgestaltung wird der verschiebbar gelagerte Bolzen gedreht, um aus seiner Ausgangsstellung heraus bewegt zu werden und/oder um in seine Befestigungsstellung hinein bewegt zu werden. In umgekehrter Richtung wird der verschiebbar gelagerte Bolzen gedreht, um aus seiner Befestigungsstellung heraus bewegt zu werden und/oder um in seine Ausgangsstellung hinein bewegt zu werden. Diese Drehbewegung wird vorzugsweise mit der vorgenannten Schiebebewegung kombiniert, um den mit Rollen versehenen Rahmen an dem Transportbehälter zu befestigen.

Der Bolzen reicht in der Befestigungsstellung in eine Öffnung des Transportbehälters hinein und zwar insbesondere in eine Öffnung, die in einem Fuß des Transportbehälters vorhanden ist, um auf technisch einfache Weise mit geringem Bauraum den mit Rollen versehenen Rahmen an dem Transportbehälter befestigen zu können.

Der drehbar gelagerte Bolzen umfasst in einer vorteilhaften Ausgestaltung einen seitlich abstehenden Stift, der in einen Führungsschlitz hineinreicht. Die Bewegung des Bolzens kann auf diese Weise fest vorgegeben werden, um den Bolzen von seiner Ausgangsstellung in seine Befestigungsstellung zu bewegen und zurück. Der Stift wird entlang des Führungsschlitzes bewegt, wenn der Bolzen von der Ausgangsstellung in die Befestigungsstellung verschoben wird oder zurück. Eine fehlerhafte Bedienung kann dadurch besonders zuverlässig vermieden werden. Der Schlitz befindet sich insbesondere in dem Bauteil, durch welches der Bolzen drehbar und/oder verschiebbar gelagert wird. Es handelt sich bei diesem Bauteil insbesondere um eine Hülse. In der Hülse befindet sich dann also der Führungsschlitz. Der Bolzen wird wiederum durch die Hülse verschiebbar und/oder drehbar gehalten.

Der Schnellverschluss umfasst bevorzugt einen Griff als Befestigungsmittel. In der Befestigungsstellung des Schnellverschlusses reicht der Griff vorzugsweise in den Rahmen hinein. Hierdurch wird besonders zuverlässig sichergestellt, dass der Griff während der Verwendung des Transportbehälters nebst Rollen nicht unplanmäßig betätigt wird. Der Griff ist dann also besonders gut vor unplanmäßigen äußeren Einflüssen geschützt. In der Ausgangsstellung des Schnellverschlusses reicht der Griff bevorzugt nach außen aus dem Rahmen heraus. Der Griff steht dann also gegenüber dem Rahmen hervor. Dies ist mit dem Vorteil verbunden, dass der Griff besonders schnell erreicht und betätigt werden kann, um einen mit Rollen versehenen Rahmen mit dem Transportbehälter zu verbinden. Insgesamt wird der Griff im Verlauf einer Befestigung vorzugsweise um ca. 180° gedreht, um den Schnellverschluss von seiner Ausgangsstellung in die Befestigungsstellung zu bringen bzw. umgekehrt. Besonders bevorzugt wird ein Griff um mehr als 180° gedreht, um eine bessere Sicherung durch Schwerkraft zu erreichen.

Der mit Rollen versehene Rahmen weist vorzugsweise an seinen Ecken in einer Ausgestaltung der Erfindung nach oben weisende Wandabschnitte auf, die seitlich des Transportbehälters angeordnet sind, wenn der mit Rollen versehene Rahmen an dem Transportbehälter befestigt ist. Durch solche Wandabschnitte wird das Befestigen eines mit Rollen versehenen Rahmens an einem Transportbehälter erleichtert, was Geschwindigkeitsvorteile bei der Montage zur Folge haben kann.

In einer Ausgestaltung wird der Transportbehälter mit dem daran befestigten Rahmen durch einen Kran auf dem Untergrund des bereits zum Teil errichteten Bauwerks abgestellt. Alternativ kann ein Gabelstapler eingesetzt werden, um den Transportbehälter mit dem daran befestigten Rahmen auf dem Untergrund eines bereits zum Teil errichteten Bauwerks abzustellen.

Der Transportbehälter weist in einer Ausgestaltung an seiner Oberseite an jeder Ecke eine Öse auf, die mit dem Kran insbesondere durch Ketten verbunden sind, wenn der Transportbehälter durch den Kran auf dem Untergrund des bereits zum Teil errichteten Bauwerks abgestellt wird. Die Ösen sind insbesondere bei den Ecken des Transportbehälters auf seiner Oberseite vorhanden.

Es ist ein Vorteil der Erfindung, dass die Zahl der benötigen mit Rollen versehenen Rahmen geringer ist als die Zahl der benötigten Transportbehälter. Die Zahl der angelieferten Transportbehälter übersteigt daher nach Ihrer Anlieferung vorteilhaft die Zahl der auf der Baustelle vorhandenen mit Rollen versehenen Rahmen und zwar vorzugsweise wenigstens um das Doppelte, bevorzugt wenigstens um das Dreifache.

Die Erfindung betrifft außerdem ein System umfassend einen aus Stahl bestehenden stapelbaren und kranbaren Transportbehälter und einen mit Rollen versehenen, aus Stahl bestehenden Rahmen, wobei der Rahmen durch Befestigungsmittel und zwar durch aus Stahl bestehende Schnellverschlüsse an der Unterseite des Transportbehälters lösbar befestigt werden kann. Die Traglast des Transportbehälters beträgt wenigstens 1000 kg, um den mechanischen Anforderungen auf einer Baustelle gewachsen zu sein. Auch der mit Rollen versehene, aus Stahl bestehende Rahmen ist so ausgelegt, dass dieser einem Gewicht von mehr als 1000 kg des mit Bauteilen gefüllten Transportbehälters gewachsen ist.

Bei jeder Ecke des Rahmens ist vorzugsweise ein Schnellverschluss mit einem Griff vorhanden. Der Griff steht vorzugsweise in der Ausgangsstellung des Schnellverschlusses seitlich gegenüber dem Rahmen vor. Der Griff steht in der Befestigungsstellung des Rahmens vorzugsweise nicht seitlich gegenüber dem Rahmen vor. Besonders bevorzugt reicht der Griff in der Befestigungsstellung nach innen in den Rahmen hinein, wenn sich der Schnellverschluss in seiner Befestigungsstellung befindet.

Ein jeder Schnellverschluss umfasst vorteilhaft einen verschiebbar sowie um seine Längsachse drehbar gelagerten Bolzen, der zwischen der Ausgangsstellung des Schnellverschlusses und der Befestigungsstellung des Schnellverschlusses hin und her verschoben werden kann. Der Bolzen umfasst vorzugsweise einen seitlich abstehenden Stift, der durch einen Schlitz bzw. Führungsschlitz geführt wird. Der Führungsschlitz umfasst vorzugsweise rechtwinklig abgebogene Enden.

Der Transportbehälter umfasst an seiner Oberseite an seinen Ecken vier Ösen, an denen Ketten eines Krans befestigt werden können, um den Transportbehälter mit darin befindlichen Bauteilen auf einem Untergrund eines bereits zum Teil errichteten Bauwerks abstellen zu können.

Das System umfasst bevorzugt mehr Transportbehälter als mit Rollen versehene Rahmen. Das System umfasst bevorzugt wenigstens zwei Transportbehälter pro mit Rollen versehene Rahmen, besonders bevorzugt wenigstens drei Transportbehälter pro mit Rollen versehene Rahmen.

Weitere vorteilhafte Ausgestaltungen des Systems wurden im Zusammenhang mit dem Verfahren erläutert.

Nachfolgend wird die Erfindung anhand von Figuren näher erläutert.

Es zeigen
- Figur 1:: Rahmen mit Rollen und Schnellverschlüssen;
- Figur 2:: Schnellverschluss in Ausgangsstellung;
- Figur 3:: Schnellverschluss in Befestigungsstellung;
- Figur 4:: Stapelgestell mit daran befestigtem Rahmen.

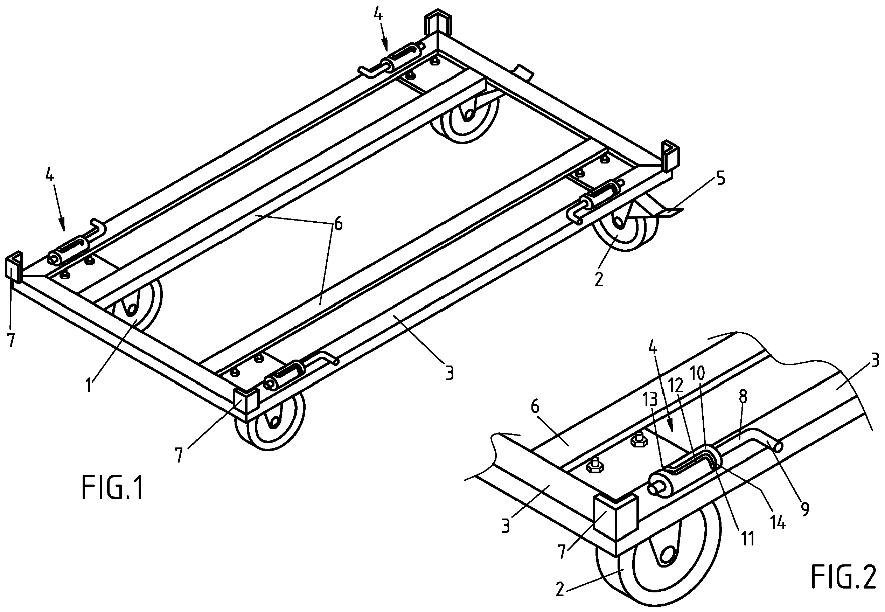

Figur 1 zeigt einen mit Rollen 1, 2 versehenen, aus Stahl bestehenden rechteckigen Rahmen 3. Die insgesamt vier Rollen 1, 2 sind an der Unterseite des Rahmens 2 befestigt und zwar bei den Ecken des Rahmens 3. Auf der Oberseite des Rahmens 3 sind bei den Ecken insgesamt vier aus Stahl bestehende Schnellverschlüsse 4 befestigt, durch die der Rahmen 3 an der Unterseite eines Transportbehälters lösbar befestigt werden kann. Die Traglast des mit den Rollen 1, 2 versehenen Rahmens 3 beträgt mehr als 1000 kg, um den mechanischen Anforderungen auf einer Baustelle gewachsen zu sein.

Zwei Rollen 2 können um eine vertikale Achse drehbar befestigt sein, um Kurven fahren zu können. Diese beiden Rollen 2 können mit einer Brems- und Feststelleinrichtung 5 versehen sein. Durch eine solche Brems- und Feststelleinrichtung 5 kann der Rahmen 3 gegen ein unbeabsichtigtes Wegrollen geschützt werden. Die verbleibenden zwei Rollen 1 sind vorzugsweise weder um eine vertikale Achse drehbar, noch verfügen diese über eine Brems- und Feststelleinrichtung.

Die beiden Stirnseiten des Rahmens 3 sind über Längsverstrebungen 6 miteinander verbunden, um die Rollen 1, 2 nicht nur um Rahmen 3, sondern auch an den Längsverstrebungen 6 aus Stabilitätsgründen befestigen zu können.

Die Ecken des Rahmens 3 sind mit Wandabschnitten 7 versehen, die nach oben abstehen. Die Wandabschnitte 7 verlaufen im Schnitt rechtwinklig. Diese sind daher besonders stabil und können einen Transportbehälter an seinen Ecken umschließen und so halten. Die Wandabschnitte verlaufen vorzugsweise schräg nach außen, um ein Einsetzen eines Transportbehälters zu erleichtern.

Die Figur 2 zeigt einen Ausschnitt einer Ecke des Rahmens 3 mit einem Schnellverschluss 4, der sich in seiner Ausgangsstellung befindet. Der Schnellverschluss 4 umfasst einen aus Stahl bestehenden Bolzen 8 mit einem in etwa rechtwinklig abgebogenen Ende. Das abgebogene Ende dient als Griff 9, um den Schnellverschluss einfach und zuverlässig betätigen zu können.

Der Griff 9 steht in der Ausgangsstellung des Schnellverschlusses 4 seitlich gegenüber dem Rahmen 3 vor und liegt in dieser Stellung auf der Oberseite des Rahmens 3 auf.

An dem Rahmen 3 ist eine aus Metall bestehende Hülse 10 angeschweißt. Durch die Hülse 10 wird der Bolzen 8 verschiebbar sowie um seine Längsachse drehbar gelagert. Der Bolzen 8 kann durch diese Lagerung zwischen seiner Ausgangsstellung und seiner Befestigungsstellung hin und her verschoben werden.

Der Bolzen 8 umfasst den rechtwinkelig abstehenden Stift 11, der durch einen Führungsschlitz 12 geführt wird. Die Enden 13 und 14 des Führungsschlitzes 12 sind rechtwinklig abgebogen.

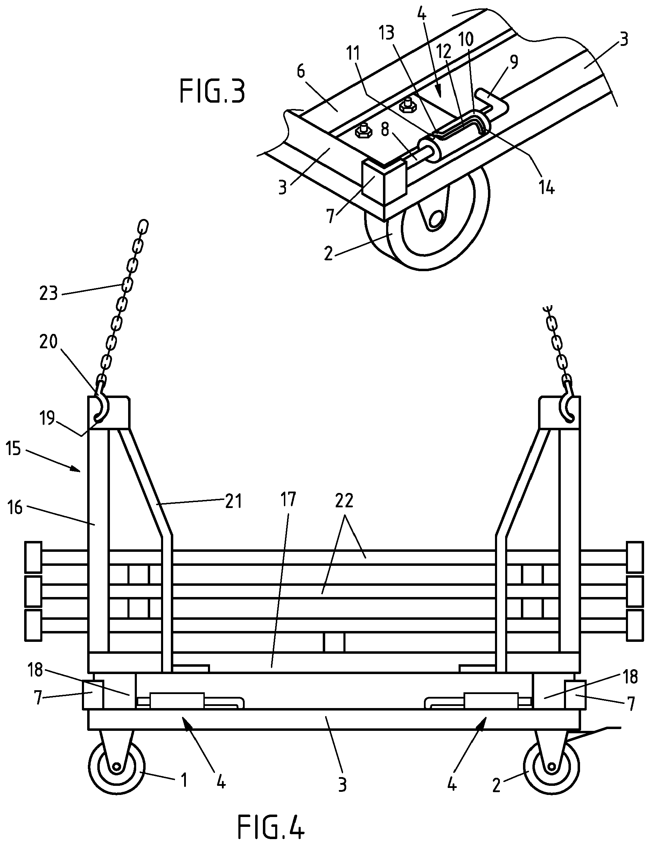

Der Griff 9 reicht in der in der Figur 3 gezeigten Befestigungsstellung nach innen in den Rahmen 3 hinein, wenn sich der Schnellverschluss in seiner Befestigungsstellung befindet. Im Vergleich zu seiner Ausgangsstellung ist der Griff daher nicht nur entlang der Hülse 10 in Richtung seiner Befestigungsstellung verschoben, sondern zusätzlich um zumindest 180°, vorzugsweise um mehr als 180°, um seine Längsachse herum gedreht worden.

Die Figur 4 zeigt einen Transportbehälter und zwar ein überwiegend aus Stahl bestehendes Stapelgestell 15 mit vier Streben 16, die von den vier Ecken eines rechteckigen Transportbehälter-Rahmens 17 senkrecht abstehen. Das Stapelgestell umfasst Füße 18, sodass in einem auf einen Untergrund aufgestellten Zustand ein Zwischenraum zwischen dem Untergrund und dem Transportbehälter-Rahmen 17 verbleibt.

Das Stapelgestell 15 ist durch die Schnellverschlüsse 4 mit dem Rahmen 3 verbunden. Die Bolzen der Schnellverschlüsse 4 reichen dann in Öffnungen oberhalb des Grunds der Füße 18 hinein.

An der Oberseite weisen die Streben 16 Ösen 19 auf. Haken 20 eines Krans reichen in die Ösen 19 hinein.

Durch Verstärkungsstreben 21 werden die Streben 16 stabilisiert. Die Verstärkungsstreben 21 sind zum einen bei den Ösen 19 angebracht und zum anderen am Transportbehälter-Rahmen 17.

Stahlrohrstützen 22 werden durch das Stapelgestell 15 gelagert.

## Patentansprüche

1. Verfahren für die Errichtung von Bauwerken mit den Schritten:
• für die Errichtung von Bauwerken benötigte Bauteile werden in kranbaren und stapelbaren Transportbehältern (15) zu einer der Errichtung eines Bauwerks dienenden Baustelle geliefert,
• ein gelieferter Transportbehälter (15) wird durch Befestigungsmittel an einem mit Rollen versehenen Rahmen lösbar befestigt,
• der Transportbehälter (15) mit dem daran befestigten Rahmen (3) wird durch eine Transporteinrichtung auf einem Untergrund eines bereits zum Teil errichteten Bauwerks abgestellt,
• der auf dem Untergrund abgestellte Transportbehälter (15) wird auf dem Untergrund mithilfe der Rollen (1, 2) zu einem Einsatzort verfahren,
• am Einsatzort werden ein oder mehrere Bauteile (22) aus dem Transportbehälter (15) für die Errichtung des Bauwerks entnommen.

2. Verfahren nach dem vorhergehenden Anspruch, **dadurch gekennzeichnet, dass** der Transportbehälter (15) durch einen Schnellverschluss (4), vorzugsweise durch vier Schnellverschlüsse (4), an dem Rahmen (3) befestigt wird.

3. Verfahren nach dem vorhergehenden Anspruch, **dadurch gekennzeichnet, dass** der Schnellverschluss (4) einen verschiebbar gelagerten Bolzen (8) umfasst, der für das Befestigen von einer Ausgangsstellung kommend in Richtung einer Befestigungsstellung verschoben wird.

4. Verfahren nach dem vorhergehenden Anspruch, **dadurch gekennzeichnet, dass** der verschiebbar gelagerte Bolzen (8) gedreht wird, um aus seiner Ausgangsstellung heraus bewegt zu werden und/oder um in seine Befestigungsstellung hinein bewegt zu werden.

5. Verfahren nach dem vorhergehenden Anspruch, **dadurch gekennzeichnet, dass** der Bolzen (8) in der Befestigungsstellung in eine Öffnung eines Fußes (18) des Transportbehälters (15) hineinreicht.

6. Verfahren nach einem der drei vorhergehenden Ansprüche, **dadurch gekennzeichnet, dass** der Bolzen (8) einen seitlich abstehenden Stift (11) umfasst, der in einen Führungsschlitz (12) hineinreicht.

7. Verfahren nach einem der vorhergehenden Ansprüche, **dadurch gekennzeichnet, dass** ein Schnellverschluss (4) mit Griff (9) als Befestigungsmittel vorgesehen ist und der Griff (9) in einer Befestigungsstellung des Schnellverschlusses (4) in den Rahmen (3) hineinreicht und/oder dass der Griff (9) in einer Ausgangsstellung des Schnellverschlusses (4) nach außen aus dem Rahmen (3) herausreicht.

8. Verfahren nach einem der vorhergehenden Ansprüche, **dadurch gekennzeichnet, dass** der mit Rollen (1, 2) versehene Rahmen (3) an seinen Ecken nach oben weisende Wandabschnitte (17) aufweist, die seitlich des Transportbehälters angeordnet sind, wenn der mit Rollen (1, 2) versehene Rahmen (3) an dem Transportbehälter (15) befestigt ist.

9. Verfahren nach einem der vorhergehenden Ansprüche, **dadurch gekennzeichnet, dass** der Transportbehälter (15) durch einen Kran auf dem Untergrund des bereits zum Teil errichteten Bauwerks abgestellt wird.

10. Verfahren nach einem der vorhergehenden Ansprüche, **dadurch gekennzeichnet, dass** der Zahl der angelieferten Transportbehälter (15) die Zahl der auf der Baustelle vorhandenen mit Rollen (1, 2) versehenen Rahmen (3) übersteigt.

11. System zur Durchführung eines Verfahrens nach einem der vorhergehenden Ansprüche umfassend einen aus Stahl bestehenden stapelbaren und kranbaren Transportbehälter (15) und einen mit Rollen (1, 2) versehenen, aus Stahl bestehenden Rahmen (3), wobei der Rahmen (3) durch Befestigungsmittel und zwar durch aus Stahl bestehende Schnellverschlüsse (4) an der Unterseite des Transportbehälters (15) lösbar befestigt werden kann, wobei die Traglast des Transportbehälters (15) wenigstens 1000 kg beträgt.

12. System nach dem vorhergehenden Anspruch, **dadurch gekennzeichnet, dass** bei jeder Ecke des Rahmens (3) ein Schnellverschluss (4) mit einem Griff (9) vorhanden ist, der in der Ausgangsstellung des Schnellverschlusses (4) seitlich gegenüber dem Rahmen (3) vorsteht und der in der Befestigungsstellung des Rahmens (3) nicht seitlich gegenüber dem Rahmen (3) vorsteht.

13. System nach einem der beiden vorhergehenden Ansprüche, **dadurch gekennzeichnet, dass** ein jeder Schnellverschluss (4) einen verschiebbar sowie um seine Längsachse drehbar gelagerten Bolzen (8) umfasst, der zwischen der Ausgangsstellung des Schnellverschlusses (4) und der Befestigungsstellung des Schnellverschlusses (4) hin und her verschoben werden kann, wobei der Bolzen (8) einen seitlich abstehenden Stift (11) umfasst, der durch einen Führungsschlitz (12) geführt wird und der Führungsschlitz (12) rechtwinklig abgebogene Enden (13, 14) umfasst.

14. System nach einem der drei vorhergehenden Ansprüche, **dadurch gekennzeichnet, dass** der Transportbehälter (15) an seiner Oberseite an seinen Ecken vier Ösen (19) umfasst, an denen Ketten (23) eines Krans befestigt werden können, um den Transportbehälter (15) mit darin befindlichen Bauteilen (22) auf einem Untergrund eines bereits zum Teil errichteten Bauwerks abstellen zu können.

15. System nach einem der vier vorhergehenden Ansprüche, **dadurch gekennzeichnet, dass** dieses eine Mehrzahl von Transportbehältern (15) umfasst und die Zahl der Transportbehälter (15) die Zahl der mit Rollen (1, 2) versehenen Rahmen (3) übersteigt.
